(19) Europäisches Patentamt

European Patent Office

Office européen des brevets

(11) **EP 0 700 140 A1**

(12) **EUROPEAN PATENT APPLICATION**

(43) Date of publication:
06.03.1996 Bulletin 1996/10

(51) Int. Cl.⁶: $H02H\ 3/33$

(21) Application number: 95113459.2

(22) Date of filing: 28.08.1995

(84) Designated Contracting States:
CH DE FR IT LI

(30) Priority: 01.09.1994 IT MI941805

(71) Applicant: ABB ELETTROCONDUTTURE S.p.A.
I-20137 Milan (IT)

(72) Inventors:
• Brandonisio, Salvatore
I-20136 Milan (IT)
• Patruno, Valter
I-20090 Buccinasco, (Milan) (IT)
• Denardi, Carlo
I-20060 Basiano, (Milan) (IT)

(74) Representative: Moretti, Giorgio et al
Notarbartolo & Gervasi s.r.l.
Viale Bianca Maria, 33
I-20122 Milano (IT)

(54) **Electronic base circuit for overload relays depending from the line voltage**

(57)    It is described an electronic base circuit for overload relays depending from the line voltage, apt to perform all functions common to the various kinds of relays, comprising the following combined elements:

- means (AMP) for detecting the fault current;
- means (RI) for measuring said current;
- command means (TRI) for any external power circuit, when a pre-fixed threshold is exceeded.

An electronic circuit according to the present invention can be implemented in an integrated circuit or carried out with separate components assembled in order to form said circuit.

Fig. 1

## Description

Field of the invention

The present invention consists of an electronic base circuit for overload relays depending from the voltage of the electrical line, apt to perform all functions common to the various kinds of relays.

Said electronic circuit, according to the present invention, can be implemented in an integrated circuit or carried out with separate components, assembled to form said circuit.

Prior art

In the prior art electronic overload relays for the protection of electrical plants and of persons against contact voltages (e.g. US-3,555,359 and US-3,619,723) are well known. They were the object of several international regulations, such as IEC 755, IEC 1008, IEC 1009, CENELEC EN 61008 and CENELEC EN 61009.

Said American patents describe circuits which avoid the specific drawbacks of the known electronic overload relays.

In fact, US-3,555,359 describes a differential circuit which compensates the effect of temperature on the transistor circuit commanding the power actuators, whereas US-3,619,723 describes a current detector which improves the overload relay sensitivity by stressing currents having peak values which are too low for commanding the power actuators.

The well-known electronic overload relays, if depending from the line voltage, can however take different shapes according to their behaviour, both in case of a supply failure and at the end of said failure.

In particular, the aforesaid overload relays, which depend from the line voltage, can:

a) automatically switch off, with or without delay, when the line voltage fails and

i) automatically switch on at the end of the failure, or
ii) not automatically switch on at the end of the failure;

b) not automatically switch off when the line voltage fails, but

i) be able to switch off in case of danger during a line voltage failure, or
ii) not be able to switch off in case of danger during a line voltage failure.

However, all known electronic overload relays depending from the line voltage have some common functions, and in particular:

- detecting the fault current;
- measuring said current;
- commanding the power actuators of the circuit when a prefixed threshold is exceeded.

The functions of supply and command are different according to the overload relay.

The applicant does not know any existing electronic base circuit presenting the aforesaid function which can be used with any type of overload relay, functionally depending from the line voltage.

Aim of the present invention is to carry out an electronic base circuit as above described, having the following advantages:

a) production of a relevant quantity of electronic base circuits, with a relative gain which is particularly remarkable if the circuit is an integrated one;
b) if the electronic circuit is formed by separate components: easy realization and independence from specialized dealers, because all used components are easily available on the market;
c) possible changes of the circuit parameters, simply varying values and linkages external to the present circuit, which can be considered equivalent to an integrated circuit.

Besides the aforesaid advantages, said electronic base circuit can detect, in any operating condition, a fault in the controlled supply line, thus generating a signal which, in its turn, can be suitably used for activating an alarm device, or else.

## Summary of the invention

Object of the present invention is an electronic base circuit for overload relays depending from the line voltage, apt to perform all functions common to the various kinds of relays, comprising the following combined elements:

- means for detecting the fault current;
- means for measuring said current;
- command means for the external power circuit able to switch off the plant wherein the fault occurs.

## List of the figures

The invention will be better described with reference to a particular non-limiting embodiment shown in the alleged figure, wherein:

- figure 1 shows a flowchart of an electronic base circuit CB according to the present invention;
- figure 2 shows an embodiment of the circuit which stabilizes the supply of circuit CB represented in figure 1;
- figure 3 shows an embodiment of amplifier AMP of figure 1;
- figure 4 shows an embodiment of the double half-wave rectifier and integrator RI of figure 1;
- figure 5 shows a first embodiment of trigger TRI of figure 1;
- figure 6 shows a second embodiment of trigger TRI of figure 1;
- figure 7 shows some wave shapes of the fault current.

## Detailed description of the invention

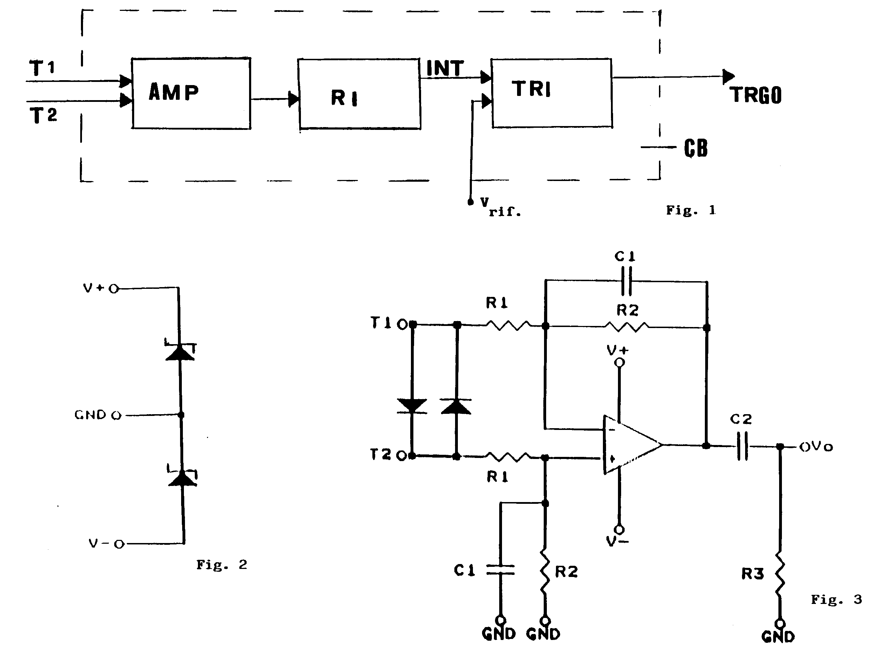

Figure 1 shows the flowchart of the electronic base circuit CB realized according to the present invention; in figure 1 the following connection points between said electronic base circuit CB and the external ones are visible:

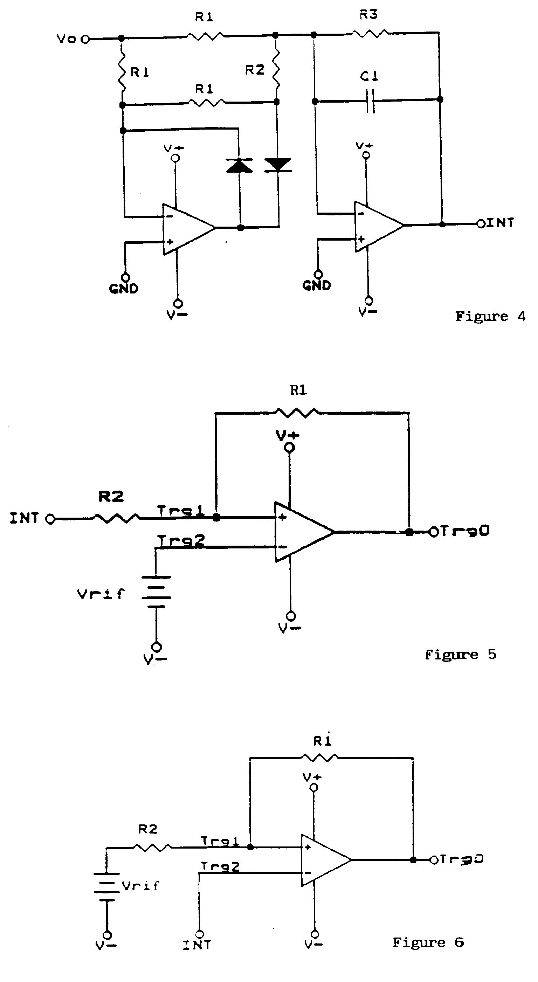

- T1 and T2: the secondary circuit of an adder transformer of the line currents (zero sequence current transformer) is linked to these inlets of amplifier AMP (figure 3);
- $V_{rif}$: reference voltage of trigger TRI (figures 5 and 6);
- TRG0: outlet of the command signal emitted by trigger TRI (figures 5 and 6) for the external power circuit.

Furthermore, figures 1-6 represent the following signals, which, although they have been generated inside the electronic base circuit CB, are available also on the relevant external pins, not represented in figure 1;

- INT: outlet signal from RI block (figure 4); the voltage of this signal is proportional to the average rectified value of the voltage between inlets T1 and T2;
- GND: signal emitted by the stabilizing circuit (figure 2) and having a value equal to half of stabilizing voltage (V-, V+) which is used as reference voltage and/or polarisation voltage in amplifier AMP (figure 3) and in block RI (figure 4);
- TRG1, TRG2: inlets into trigger TRI (figures 5, 6); the outlet INT of block RI is linked to one of these inlets (figure 4), whereas the reference voltage $V_{rif}$ is linked to the other one. Said inlets (TRG1, TRG2) being interchangeable, it is possible that the outlet TRG0 of trigger TRI has the value V- without fault and that it commutates into V+ with fault (non-inverting trigger, figure 5) or viceversa (inverting trigger; figure 5), as required.

Generally speaking, the working of the device can be described as following: the secondary coil of a toroidal tranformator (not shown in figure) is linked to the inlets T1 and T2 where a fault signal is detected, caused by the lack of balance between the currents flowing through the primary coils of said toroidal transformer.

Said fault signal is first filtered (in order to eliminate the eventual noises on line) and amplified by amplifier AMP (figure 3), then it is double half-wave rectified and integrated in block RI (figure 4) in order to obtain an outlet voltage INT having a value function of the secondary voltage value of the toroidal transformer (error signal) and, as a consequence, of the fault current.

The INT voltage is then sent to an outlet of a Schmitt trigger TRI (figures 5, 6) which compares said voltage with the reference voltage $V_{rif}$ and commutates its own outlet TRG0 when the tension INT exceeds said reference voltage; suitably shaping the trigger inlets (TRG1, TRG2) it is possible to realize a non-inverting trigger (figure 5) or an inverting trigger (figure 6).

With reference to the embodiments shown in figures 2-6 the features of the single blocks constituting the electronic base circuit CB are deeply considered. Figure 2 shows an embodiment of the circuit which stabilizes the supply of circuit CB of figure 1, wherein said stabilizing circuit has been omitted in the flowchart of figure 1 in order to simplify the representation.

Said stabilizing circuit consists of two Zener diodes in series where the stabilizing voltage (V-, respectively V+) is applied; the signal GND is taken from the common point of said two Zener diodes.

Furthermore, the use of Zener diodes allows the stabilizing circuit to protect the electronic base circuit CB according to the present invention from the external overvoltages.

Figure 3 shows a particular embodiment of amplifier AMP of figure 1. The signal value detected in correspondance to the secondary coil pins of said toroidal transformer (inlets T1, T2; figure 1) usually corresponds to some millivolts and for that reason the amplifying stage AMP is present, which, in its turn, consists of an operational amplifier suitably designed. In correspondance to the outlet pin said amplifier presents (disregarding the effect of the condensers) a signal $V_o(t)$ linked to the voltage $V_i(t)$ between its inlets according to the following relation:

$$V_o(t)=(R2/R1)^*V_i(t)$$

wherein $V_i(t)$ is the voltage between T1 and T2.

The condensers perform a filter action, i.e. they lower the signals having a higher frequency.

Taking into account the frequency answer, we obtain the following relation:

$$V_o(omega) = (R2/R1)^*(1/(1+j\ omega\ C1R1))^*V_i(omega)$$

wherein $1/(c1^*R1)$ is about the cutoff frequency.

The components C2 and R2 have the aim to de-couple the direct signal, avoiding possible problems due to the presence of the outlet voltage $V_o(t)$ (not equal to 0) in absence of the inlet signal $V_i(t)$.

Finally, the two diodes mounted in opposition between T1 and T2 have the aim of protecting the inlet of the operational amplifier from possible overvoltages, in case of short circuit towards earth.

Figure 4 shows an embodiment of the double half-wave rectifier and integrator RI of figure 1.

The alleged scheme works as an ideal Graetz bridge, namely free from voltage drops on the diodes, and can thus be used in order to rectify also signals having a value of a few millivolts. It amplifies an inlet signal with a gain of -R3/R1. The value of condenser C1 is chosen so as $1/(C1^*R3) \ll 50[Hz]$. Its effect is therefore the integration of the signal coming from the rectifier, so obtaining an outlet signal INT proportional to the average rectified value of signal $V_o(t)$ coming from said amplifier AMP, i.e. proportional to the average rectified value of the inlet signal $V_i(t)$ of amplifier AMP (figure 3).

The combined effect of the filter condensers of amplifier AMP (figure 3) and of block RI (figure 4) causes the outlet signal INT to be roughly proportional to the effective value of the fault current when this latter has a wave shape comprised among those foreseen by the aforesaid regulations for the overload relay, and i.e.:

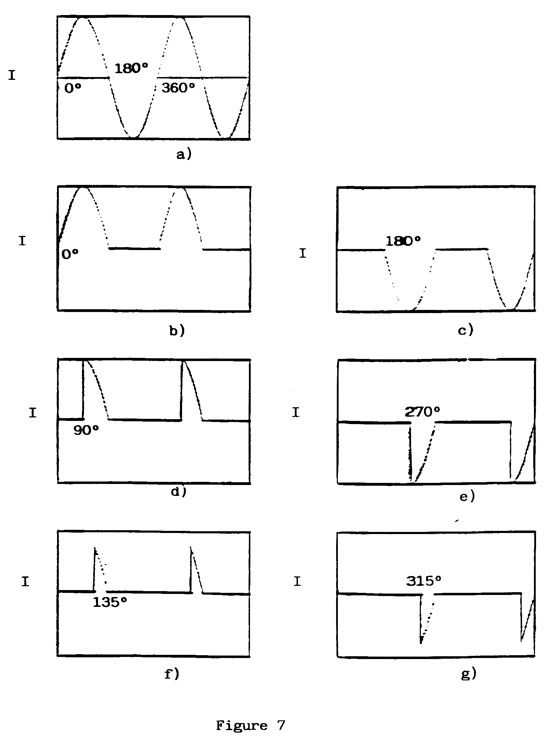

- sinusoidal (figure 7a);
- rectified to 0° (figure 7b) or to 180° (figure 7c);
- choked to 90° (figure 7d), to 270° (figure 7e), to 135° (figure 7f) or to 315° (figure 7g).

Figures 5 and 6 respectively show a first and a second embodiment of trigger TRI of figure 1.

The circuit shown in the figures represents an elementary block of a Schmitt trigger. The possibility to foresee different kinds of links in correspondance to inlets TRG1 and TRG2 of trigger TRI allows different solutions, which satisfy the various commands of the power actuator of the overload relay.

Figure 5 shows a particular embodiment of the non-inverting trigger TRI, whereas figure 6 shows an embodiment of the inverting trigger TRI.

Furthermore, it is possible to alter the value of the action threshold (sensitivity) of a circuit according to the present invention by modifying the reference voltage value $V_{rif}$ applied to the relevant inlet of trigger TRI.

Said possibility is particularly advantageous if one or more components external to the circuit must be replaced with other ones having different features.

For instance, the replacement of the toroidal transformer used to detect the fault current with another toroidal transformer having a slightly different reaction (with the same fault current), as regards to the available signals in correspondance to pins T1 and T2 of block AMP of figure 1, involves a sensitivity variation of the circuit CB according to the present invention, wherein said variation can be easily annulled by suitably modifying the reference voltage value $V_{rif}$.

It will be obvious to those skilled in the art that modifications may be made in details of construction and arrangement without departing from the scope of the present invention.

## Claims

1. Electronic base circuit for overload relays depending from the line voltage, apt to perform all functions common to the various kinds of relays, comprising the following combined elements:

   - means (AMP) for detecting the fault current;
   - means (RI) for measuring said current;
   - command means (TRI) for the external power circuit able to switch off the plant wherein the fault occurs.

2. Electronic circuit according to claim 1, wherein the alteration of the parameters of said electronic circuit is performed by varying the values and the linkages of components external to said electronic circuit.

3. Electronic circuit according to claim 1, wherein said means (RI) for measuring said fault current comprises a double half-wave rectifier and an integrating circuit, said means (RI) for measuring said fault current being able to:

   - rectify the inlet signal ($V_o(t)$) coming from said means (AMP) for detecting said fault current by keeping the outlet signal from said rectifying stage, said outlet signal referring to the same potential of said inlet signal ($V_o(t)$);
   - amplify said inlet signal ($V_o(t)$) without requiring a too high gain to the amplifying stage belonging to said means (AMP) for detecting the fault current with the suitable dynamic reaction and with a better noise resistance;
   - integrate said rectified inlet signal ($V_o(t)$) by producing an outlet signal (INT) proportional to the rectified average value of said inlet signal ($V_o(t)$).

4. Electronic circuit according to claim 1, wherein said means (AMP) for detecting the fault current, said means (RI) for measuring said current, said command means (TRI) of the external power circuit able to switch off the damaged electrical plant and stabilizing means able to stabilize the current supply of all aforesaid means (AMP, RI, TRI) and having also a protecting function against external overvoltages, are all combined in a single integrated circuit.

5. Electronic circuit according to claim 1, wherein said means (AMP, RI, TRI, stabilizing circuit) constituting said electronic base circuit can be, partially or totally, separately produced and then assembled in order to form said electronic base circuit.

EP 0 700 140 A1

Fig. 1

Fig. 2

Fig. 3

Figure 4

Figure 5

Figure 6

7

Figure 7

**European Patent Office**

**EUROPEAN SEARCH REPORT**

Application Number

EP 95 11 3459

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 833 564 (PARDUE VON G ET AL) 23 May 1989<br>* column 2, line 25 - line 39 *<br>* column 3, line 19 - line 45; figures 1,2 * | 1-4 | H02H3/33 |
| X | EP-A-0 020 080 (TRIDENT EQUIP LTD) 10 December 1980<br>* page 6, line 25 - page 9, line 5; figure 2 * | 1 | |
| A | US-A-5 224 007 (GILL JR HARRY A) 29 June 1993<br>* column 6, line 16 - line 20; figure 5 * | 2 | |

**TECHNICAL FIELDS SEARCHED (Int.Cl.6)**

H02H

The present search report has been drawn up for all claims

| Place of search | Date of completion of the search | Examiner |
|---|---|---|
| THE HAGUE | 4 December 1995 | Salm, R |